# EUROPEAN PATENT APPLICATION

(11) **EP 1 863 293 A2**
(43) Date of publication of application: **05.12.2007**
(21) Application number: 07251117.3
(22) Date of filing: 15.03.2007
(51) Int. Cl.: H04N 7/26, H04N 7/30

(54) **Image processing apparatus, image processing method and image processing program**

(30) Priority: 31.03.2006 JP 2006099128
(71) Applicant: KABUSHIKI KAISHA TOSHIBA, Tokyo 105-8001 (JP)
(72) Inventor: Kokojima, Yoshiyuki, Tokyo (JP)
(74) Representative: Maury, Richard Philip

(57) **Abstract**

An image processing apparatus has an overlapping unit (4, 7) and an image processing unit. The overlapping unit overlaps a plurality of scalar format images arranged in at least one of a horizontal direction and a vertical direction and converts them into vector format image data. The image processing unit (6, 9) performs a deblocking filter processing for the vector image data.

## Description

This invention relates to an image processing apparatus, image processing method and image processing program.

In the recent compression coding method for moving pictures, a high compression rate has been realized by combining a process of reducing the redundancy in the time direction between adjacent frames and a process of reducing the redundancy in the spatial direction in a single frame.

In the latter process of reducing the redundancy in the spatial direction among the above two processes, an image is divided into pixel blocks with adequate size (for example, the four pixels in width and the four pixels in height) and redundant components of the blocks are eliminated by subjecting the blocks to a DCT (discrete cosine transform) process for each block unit in many cases. However, in the coding system for every block unit, distortion called block noises occurs in pixels lying near the boundary between adjacent blocks and this leads to a main cause of deterioration in the image quality.

Therefore, in the recent compression coding system, a process called a deblocking filtering process which suppresses block noises by making a correction to make smooth discontinuous pixels near the block boundary is added. The deblocking filtering process is relatively simple, but the processing amount required for the deblocking filtering process is extremely large and it accounts for 50% of the total processing amount of the decoding process in some cases. Therefore, in JP. A 2004-180248 (KOKAI) or the like, the technique for reducing the processing amount of the deblocking filter and making the operation speed high by determining whether the coding distortion eliminating process is required or not and operating the deblocking filter only when the above eliminating process is required is proposed.

On the other hand, the progress of a recent GPU (graphics processing unit) is significant and the GPU comes to have both of high programmability and parallel arithmetic operation ability. Therefore, the GPUs tend to be mounted not only on computers such as PCs but also on household electrical appliances, mobile instruments or game machines. Further, an attempt to utilize the GPU for general applications other than the graphics by making use of the high programmability thereof is actively made and the attempt extends to a field of coding and decoding of moving pictures.

However, in the invention described in JP. A 2004-180248 (KOKAI), etc., the general-purpose parallel vector processor such as the GPU is not considered as a platform which realizes the deblocking filter. Therefore, the deblocking filter cannot be operated at high speed by making full use of the ability of the general-purpose parallel vector processor such as the GPU.

An image processing apparatus according to an aspect of the invention comprises: an overlapping unit configured to overlap a plurality of scalar format images arranged in at least one of a horizontal direction and a vertical direction and convert them into vector format image data; and an image processing unit configured to perform a deblocking filter processing for the vector image data. The invention is not limited to the apparatus, and may be realized by the method and computer readable program.

The invention can be more fully understood from the following detailed description when taken in conjunction with the accompanying drawings, in which:
FIG. 1 is a block diagram showing the schematic configuration of an image processing apparatus according to a first embodiment;
FIG. 2 is a diagram showing a configuration example of a moving picture in a case where an image of one frame is configured by three color components of Y, Cb and Cr;
FIGS. 3A and 3B are diagrams showing examples of scalar image data stored in an input scalar image memory unit 3 in the first embodiment;
FIGS. 4A to 4C are diagrams showing examples of vector image data stored in a horizontal vector image memory unit 5 in the first embodiment;
FIG. 5 is a diagram showing a reference pixel of a deblocking filter with respect to the pixel block boundary in the horizontal direction in the first embodiment;
FIGS. 6A and 6B are diagrams showing a deblocking filtering process by the conventional scalar operation;
FIGS. 7A and 7B are diagrams showing a deblocking filtering process by the vector operation in the first embodiment;
FIGS. 8A to 8C are diagrams showing the process dependency of the deblocking filter with respect to the pixel block boundary in the horizontal direction in the first embodiment;
FIG. 9 is a diagram showing an example of vector image data stored in a vertical vector image memory unit 8 in the first embodiment;
FIGS. 10A and 10B are diagrams showing examples of vector image data stored in the vertical vector image memory unit 8 in the first embodiment;
FIG. 11 is a diagram showing a reference pixel of the deblocking filter with respect to the pixel block boundary in the vertical direction in the first embodiment;
FIGS. 12A to 12C are diagrams showing the process dependency of the deblocking filter with respect to the pixel block boundary in the vertical direction in the first embodiment;
FIG. 13 is a block diagram showing the schematic configuration of an image processing apparatus according to a second embodiment;
FIG. 14 is a diagram showing vector image data sorted by a horizontal pixel array sorting unit 13 in the second embodiment;
FIGS. 15A and 15B are diagrams showing vector image data sorted by the horizontal pixel array sorting unit 13 in the second embodiment;
FIG. 16 is a diagram showing vector image data sorted by a vertical pixel array sorting unit 14 in the second embodiment;
FIGS. 17A and 17B are diagrams showing vector image data sorted by the vertical pixel array sorting unit 14 in the second embodiment;
FIG. 18 is a diagram showing an example of scalar image data stored in an input scalar image memory unit 3 in a third embodiment;
FIG. 19 is a diagram showing a reference pixel of the deblocking filter with respect to the pixel block boundary in the horizontal direction in the third embodiment;
FIG. 20 is a diagram showing a reference pixel of the deblocking filter with respect to the pixel block boundary in the vertical direction in the third embodiment;
FIG. 21 is a diagram showing an example of vector image data stored in a horizontal vector image memory unit 5 in the third embodiment;
FIG. 22 is a diagram showing an example of vector image data stored in the horizontal vector image memory unit 5 in the third embodiment;
FIGS. 23A and 23B are diagrams showing a deblocking filtering process by the vector operation in the third embodiment;
FIG. 24 is a diagram showing an example of vector image data stored in a vertical vector image memory unit 8 in the third embodiment;
FIG. 25 is a diagram showing an example of vector image data stored in the vertical vector image memory unit 8 in the third embodiment;
FIG. 26 is a diagram showing an example of vector image data stored in a horizontal vector image memory unit 5 in a fourth embodiment;
FIG. 27 is a diagram showing an example of vector image data stored in the horizontal vector image memory unit 5 in the fourth embodiment;
FIG. 28 is a diagram showing an example of vector image data stored in the horizontal vector image memory unit 5 in the fourth embodiment;
FIGS. 29A and 29B are diagrams showing a deblocking filtering process by the vector operation in the fourth embodiment;
FIG. 30 is a diagram showing an example of vector image data stored in a vertical vector image memory unit 8 in the fourth embodiment;
FIGS. 31A and 31B are diagrams showing examples of vector image data stored in the vertical vector image memory unit 8 in the fourth embodiment;
FIG. 32 is a diagram showing a reference pixel of the deblocking filter with respect to the pixel block boundary in the horizontal direction in a fifth embodiment;
FIG. 33 is a diagram showing a reference pixel of the deblocking filter with respect to the pixel block boundary in the vertical direction in the fifth embodiment;
FIGS. 34A and 34B are diagrams showing examples of vector image data stored in a horizontal vector image memory unit 5 in the fifth embodiment;
FIGS. 35A and 35B are diagrams showing examples of vector image data stored in a vertical vector image memory unit 8 in the fifth embodiment;
FIGS. 36A and 36B are diagrams showing examples of vector image data stored in a horizontal vector image memory unit 5 in a sixth embodiment;
FIG. 37 is a diagram showing an example of the reallocation process of a horizontal pixel array sorting unit 13 in the sixth embodiment;
FIGS. 38A and 38B are diagrams showing examples of vector image data stored in a vertical vector image memory unit 8 in the sixth embodiment;
FIG. 39 is a diagram showing an example of the reallocation process of a vertical pixel array sorting unit 14 in the sixth embodiment;
FIG. 40 is a diagram showing an example of the reallocation process of a horizontal pixel array sorting unit 13 in a seventh embodiment; and
FIG. 41 is a diagram showing an example of the reallocation process of a vertical pixel array sorting unit 14 in the seventh embodiment.

Embodiments will be explained hereinafter with reference to the accompanying drawings.

The point of this invention is as follows.
(1) A plurality of scalar format pixels lying near the block boundary are overlapped and converted into a vector format pixels based on the conditions such as the pixel block size, pixel format and a reference pixel of a deblocking filter.
(2) The vector format pixels are sorted based on the memory access method of the parallel vector processor and the process dependency of the deblocking filter.

### (First Embodiment)

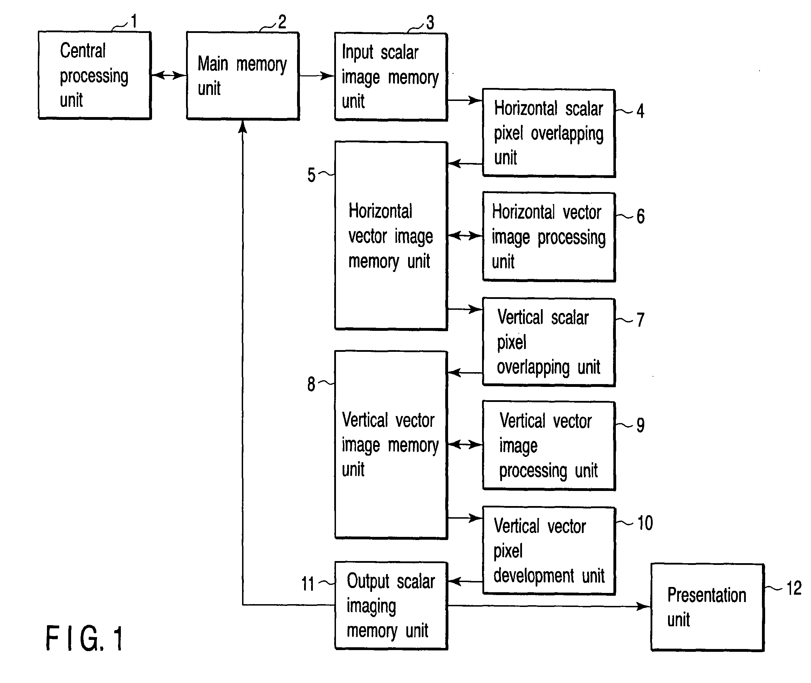

As shown in FIG. 1, an image processing apparatus according to a first embodiment includes a central processing unit 1, main memory unit 2, input scalar image memory unit 3, horizontal scalar pixel overlapping unit 4, horizontal vector image memory unit 5, horizontal vector image processing unit 6, vertical scalar pixel overlapping unit 7, vertical vector image memory unit 8, vertical vector image processing unit 9, vertical vector image development unit 10, output scalar image memory unit 11 and presentation unit 12. Also, FIG. 1 shows the flow of data in addition to the connection relation between the blocks. The functions of the respective blocks are explained below.

The central processing unit 1 controls the operations of the respective blocks and data transfer between the blocks.

The main memory unit 2 holds programs to control the operations of the respective blocks, moving picture data and the like.

The input scalar image memory unit 3 stores scalar format input image data.

The horizontal scalar pixel overlapping unit 4 reads out scalar format image data held in the input scalar image memory unit 3, overlaps a plurality of scalar format pixels arranged in a horizontal direction and converts the overlapped data into vector format image data.

The horizontal vector image memory unit 5 stores vector format image data output from the horizontal scalar pixel overlapping unit 4.

The horizontal vector image processing unit 6 subjects the vector format image data held in the horizontal vector image memory unit 5 to a deblocking filtering process.

The vertical scalar pixel overlapping unit 7 reads out vector format image data held in the horizontal vector image memory unit 5, overlaps the elements of a plurality of vector format pixels arranged in a vertical direction and converts the overlapped data into different vector format image data.

The vertical vector image memory unit 8 stores vector format image data output from the vertical scalar pixel overlapping unit 7.

The vertical vector image processing unit 9 subjects the vector format image data held in the vertical vector image memory unit 8 to a deblocking filtering process.

The vertical vector image development unit 10 reads out vector format image data held in the vertical vector image memory unit 8, develops the elements of the respective vector format pixels in the vertical direction and converts the developed data into scalar format image data.

The output scalar image memory unit 11 stores scalar format image data output from the vertical vector image development unit 10.

The presentation unit 12 has a display device such as a liquid crystal display device and presents image data held in the output scalar image memory unit 11.

With the above configuration, the respective memory units of the main memory unit 2, input scalar image memory unit 3, horizontal vector image memory unit 5, vertical vector image memory unit 8 and output scalar image memory unit 11 are represented by different constituents, but they can be collectively configured on a single memory or separately configured on a plurality of different memories.

The data flow of the image processing apparatus shown in FIG. 1 and the detail operations of the respective blocks are explained below.

As described above, the central processing unit 1 controls the operations of the respective blocks and data transfer between the blocks.

The main memory unit 2 stores programs used to control the operations of the respective blocks, moving picture data and image data transferred from the output scalar image memory unit 11 and subjected to a deblocking filtering process.

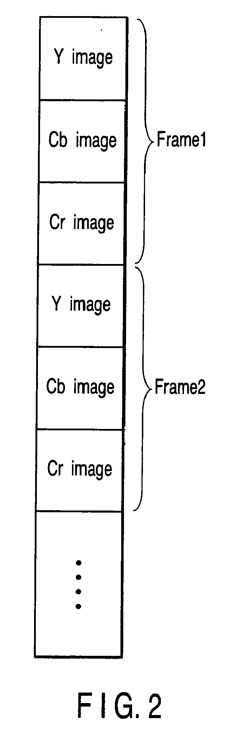

As shown in FIG. 2, moving picture data is obtained by arranging image data in the respective color components of one frame of a moving picture. In the first embodiment, the following explanation is made on the assumption that the above moving picture data is previously stored in the main memory unit 2.

The input scalar image memory unit 3 stores only image data of a specific color component of a present frame in the moving picture data held in the main memory unit 2.

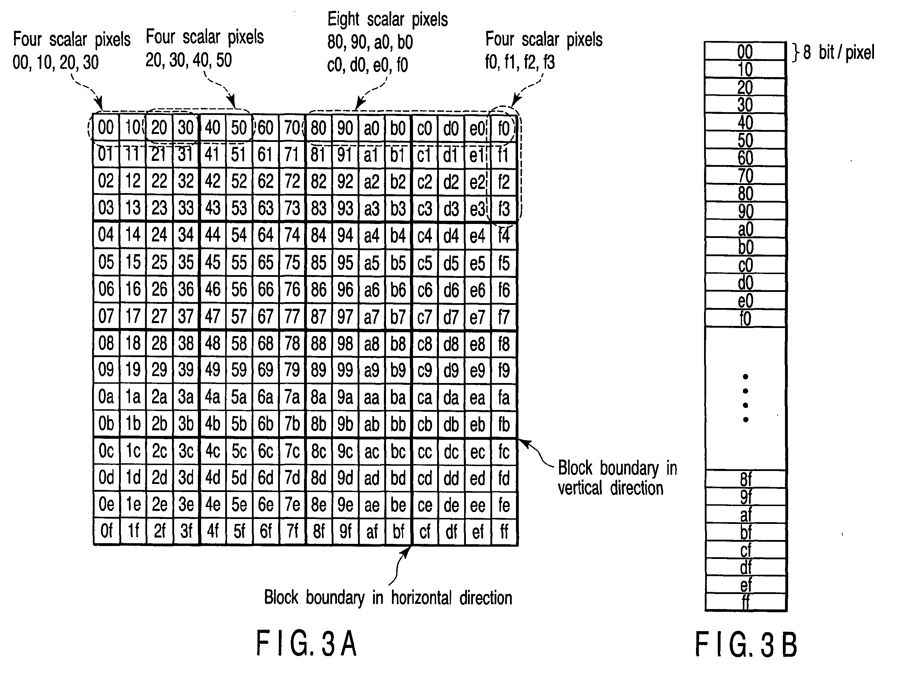

FIG. 3A shows the pixel array in the input scalar image memory unit 3 and FIG. 3B shows an example of the arrangement order of the pixels on the memory. In each embodiment, it is assumed that, for example, an 8-bit scalar value is assigned to respective pixels and the respective pixels is arranged in a raster order in image data of a specific color component (refer to FIG. 3B). For convenience of explanation, the operations of the respective blocks performed when image data of FIGS. 3A and 3B are given will be explained below, but this invention is not limited to the image data shown in FIGS. 3A and 3B and can be applied to image data with different sizes having pixels of different numbers of bits.

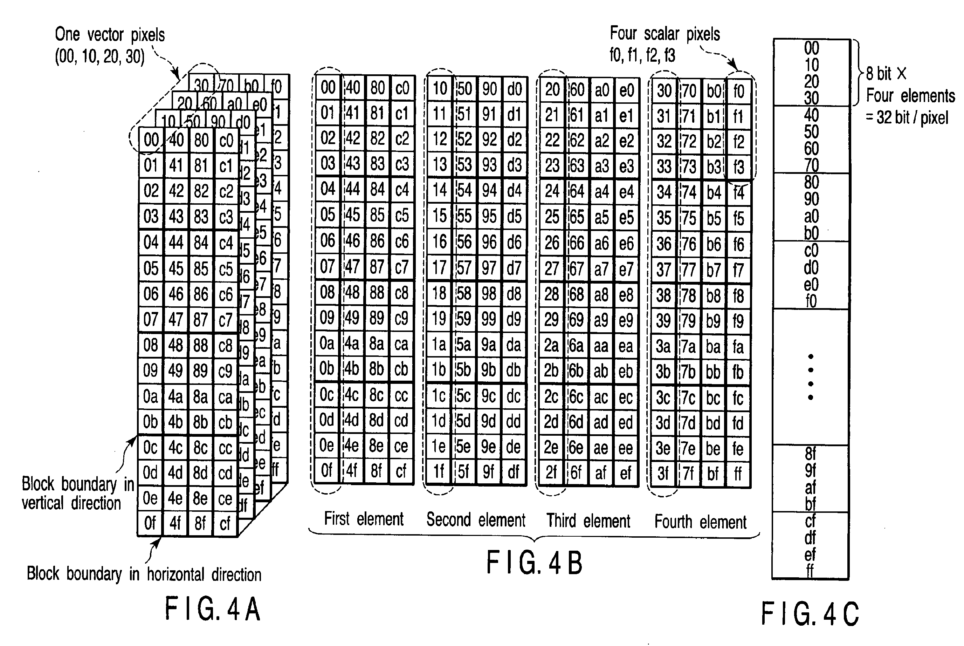

The horizontal scalar pixel overlapping unit 4 reads out image data held in the input scalar image memory unit 3 as shown in FIG. 3A, overlaps a plurality of scalar format pixels successively arranged in the horizontal direction and converts the overlapped pixels into one pixel vector so that each pixel corresponds an element of the vector. Thus, vector format image data as shown in FIG. 4A is obtained. In the operation of converting the scalar format pixels to the vector format pixel, an adequate conversion method is selected based on conditions of the width of the pixel block, the format of the scalar format pixel before conversion, the format of the vector format pixel after conversion, a reference pixel of the deblocking filter with respect to the pixel block boundary in the horizontal direction and the like.

In each embodiment, the width of the pixel block is four pixels as shown in FIG. 3A and the scalar format pixel before conversion is represented by an 8-bit integer format as shown in FIG. 3B.

The horizontal scalar pixel overlapping unit 4 overlaps four scalar format pixels arranged in the horizontal direction in the pixel block shown in FIG. 3A to convert them into one vector format pixel having four elements as shown in FIGS. 4A to 4C. The detail operation will be explained below.

For example, four scalar format pixels 00, 10, 20, 30 surrounded by broken lines in FIG. 3A are converted into one vector format pixel (00, 10, 20, 30) surrounded by broken lines in FIG. 4A.

As shown in FIG. 4A, the size of the pixel block has the width of one pixel, the four pixels in height and the depth (the number of elements of the vector pixel) of four pixels in the vector format image data after conversion and pixel block boundaries in the horizontal direction are set between the respective pixels arranged in the horizontal direction. FIG. 4B is a diagram showing the vector format pixels for each element in a plane format.

As shown in FIG. 4C, the vector format pixel after conversion has four elements and each element is represented by an 8-bit integer format.

After conversion from the scalar format to the vector format, the horizontal scalar pixel overlapping unit 4 outputs the obtained vector format image data to the horizontal vector image memory unit 5.

The horizontal vector image memory unit 5 stores the vector format image data (FIGS. 4A to 4C) output from the horizontal scalar pixel overlapping unit 4.

The horizontal vector image processing unit 6 subjects the pixel block boundary in the horizontal direction of the vector format image data (FIGS. 4A to 4C) held in the horizontal vector image memory unit 5 to the deblocking filtering process.

Generally, the operation of the deblocking filter is performed by deriving a weighted average of pixels lying near a plurality of pixels near the pixel block boundary for the plurality of pixels. The pixels and weights used for the weighted average are adaptively determined according to various conditions in many cases.

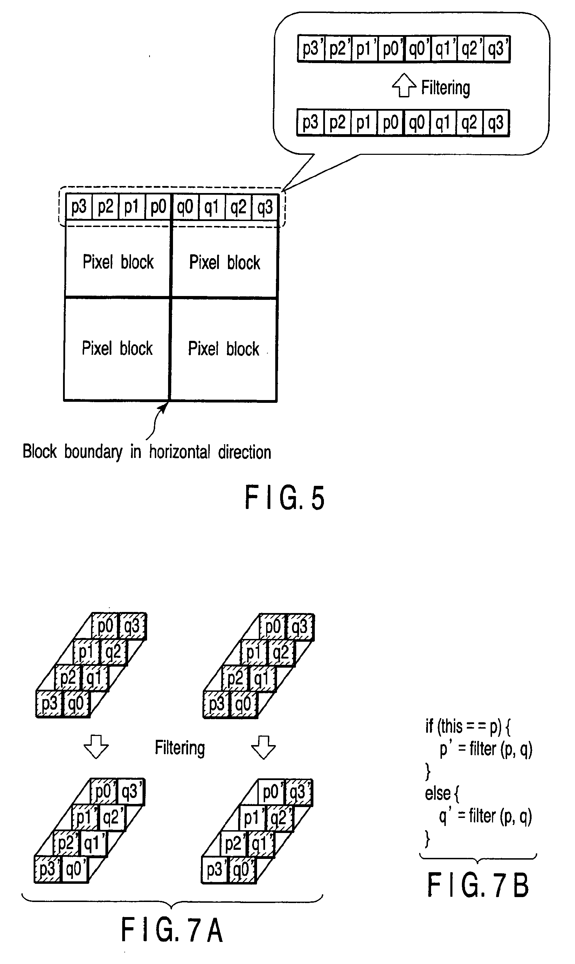

In the embodiment, for convenience of explanation, the operation of the weighted average is supposed as follows. As shown in FIG. 5, eight pixels (p3 to p0 and q0 to q3) arranged on the right and left sides of the pixel block boundary in the horizontal direction are used as a reference pixel of the deblocking filter with respect to the boundary.
p3' = filter (p3)
p2' = filter (p3, p2, p1, p0, q0)
p1' = filter (p2, p1, p0, q0)
p0' = filter (p2, p1, p0, q0, q1)
q0' = filter (p1, p0, q0, q1, q2)
q1' = filter (p0, q0, q1, q2)
q2' = filter (p0, q0, q1, q2, q3)
q3' = filter (q3)

In this case, p3 to p0, q0 to q3, p3' to p0' and q0' to q3' indicate scalar format pixel values of FIG. 5. Further, filter () is a function used to calculate the weighted average of scalar format pixel values given to an argument. Since setting of the weights used for the weighted average is not directly related to the contents of this invention, the explanation thereof will be omitted.

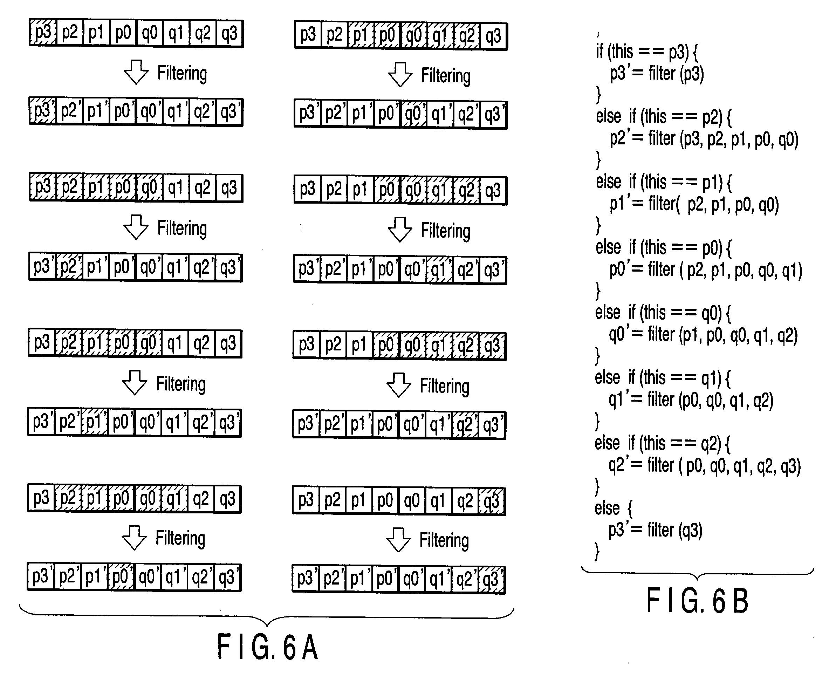

In order to calculate the weighted average by use of a vector processor such as a GPU, it is necessary to independently perform the arithmetic operation for all of the eight scalar format pixels as shown in FIG. 6A. Therefore, as shown in FIG. 6B, a parallel arithmetic unit in the processor determines one of the eight scalar format pixels which is input and must process a complicated condition branch in order to switch calculations for the weighted average according to the result of determination. In FIGS. 6A and 6B, hatched pixels indicate that the filtering process is performed by use of the hatched pixels to derive values of the hatched pixels. For example, it is indicated in FIG. 6A that the pixel p3' is obtained by performing the filtering process by use of the pixel p3 and it is indicated in FIG. 6B that the pixel p2' is obtained by performing the filtering process by use of the pixels p3, p2, p1, p0, q0. Since this applies to the other cases, the explanation thereof will be omitted.

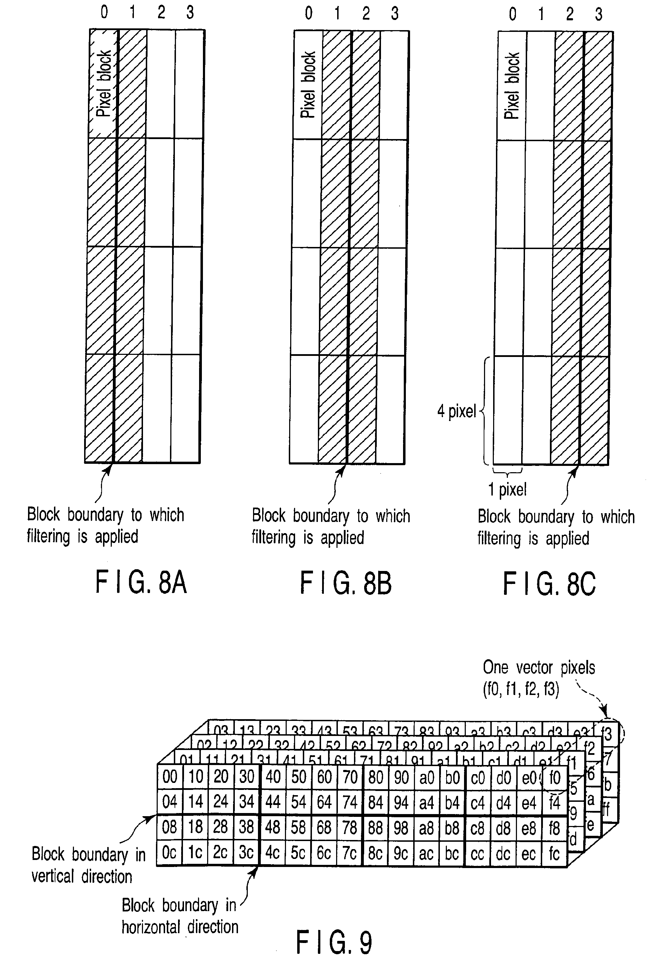

However, according to the image processing apparatus of the embodiment, since the scalar format pixels are converted into the vector format pixel by the preceding-stage horizontal scalar pixel overlapping unit 4, it is only required to perform the arithmetic operation for two vector format pixels as shown in FIG. 7A. Therefore, as shown in FIG. 7B, the parallel arithmetic unit in the processor is only required to determine one of the two vector format pixels and the number of condition branches can be reduced.

As a result, the arithmetic operation of the deblocking filter with respect to the pixel block boundary in the horizontal direction can be efficiently performed.

In FIG. 7B, the vector format pixels (p3, p2, p1, p0), (q0, q1, q2, q3), (p3', p2', p1' , p0') and (q0', q1', q2', q3') are respectively represented by p, q, p' and q'. Further, filter () is a function used to calculate the weighted average with reference to vector format pixel values given to an argument.

When the arithmetic operation of the deblocking filter is performed, it is necessary to pay attention to the process dependency of the arithmetic operation. For example, as shown in FIG. 8B, the result of filtering for the boundary between the pixel block of the column 1 and the pixel block of the column 2 depends on the pixel value of the column 1, but the pixel value of the column 1 depends on the result of filtering for the boundary between the column 1 and the adjacent column 0 on the left side. Therefore, the correct result cannot be obtained if the filtering process for the boundary between the column 0 and the column 1 of FIG. 8A is not completed before filtering the boundary between the column 1 and the column 2 of FIG. 8B. Likewise, the correct result cannot be obtained if the filtering process for the boundary between the column 1 and the column 2 of FIG. 8B is not completed before filtering the boundary between the column 2 and the column 3 of FIG. 8C.

Therefore, in order to correctly perform the operation of the deblocking filter, first, the filtering process for the boundary between the column 0 and the column 1 is performed with reference to colored pixel blocks of FIG. 8A and the filtering process for the boundary between the column 1 and the column 2 is performed with reference to colored pixel blocks of FIG. 8B after the above filtering process is completed. Then, after all of the above filtering processes are completed, the filtering process for the boundary between the column 2 and the column 3 is performed with reference to colored pixel blocks of FIG. 8C.

When calculation for the weighted average of all of the pixels lying near the pixel block boundary in the horizontal direction is completed, the horizontal vector image processing unit 6 outputs vector format image data subjected to the deblocking filtering process to the horizontal vector image memory unit 5.

The vertical scalar pixel overlapping unit 7 reads out vector format image data (FIGS. 4A to 4C) held in the horizontal vector image memory unit 5 and overlaps elements of a plurality of vector format pixels arranged in the vertical direction to convert them into different vector format image data (FIGS. 9 to 10B) which will be described in detail later. In the operation of conversion into the different vector format, an adequate conversion method is selected according to conditions of the height of the pixel block, the format of the vector format pixel before conversion, the format of the vector format pixel after conversion, a reference pixel of the deblocking filter with respect to the pixel block boundary in the vertical direction and the like.

In the embodiment, as shown in FIG. 3A, the height of the pixel block is four pixels. Further, as shown in FIG. 4C, the vector format pixel before conversion is configured by four elements and each element is represented by an 8-bit integer format.

In this case, the vertical scalar pixel overlapping unit 7 overlaps vector elements corresponding to the four vector format pixels arranged in the vertical direction in the pixel block in FIG. 4A and converts them into different vector format pixels as shown in FIGS. 9 to 10B. The concrete operation is as follows.

For example, fourth elements f0, f1, f2, f3 in four vector format pixels (c0, d0, e0, f0), (c1, d1, e1, f1), (c2, d2, e2, f2) and (c3, d3, e3, f3) in FIG. 4A are converted into one vector format pixel (f0, f1, f2, f3) surrounded by broken lines in FIG. 9. Likewise, the other elements are converted. For example, the first element is converted into a pixel (c0, c1, c2, c3), the second element is converted into a pixel (dO, d1, d2, d3) and the third element is converted into a pixel (e0, e1, e2, e3).

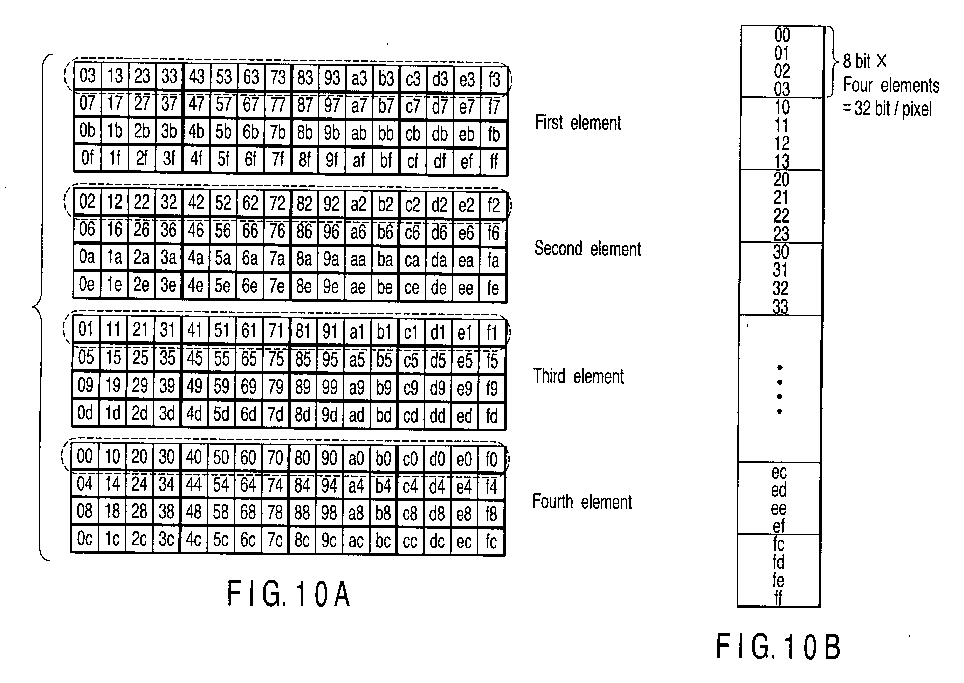

As shown in FIG. 9, in the vector format image data after conversion, the size of the pixel block has the four pixels in width, the height of one pixel and the depth (the number of elements of the vector pixel) of four pixels and pixel block boundaries in the vertical direction are set between the respective pixels arranged in the vertical direction. FIG. 10A shows the vector format pixels for each element in a plane format.

As shown in FIG. 10B, the vector format pixel after conversion is configured by four elements and each element is represented by an 8-bit integer format.

If the operation of conversion into the different vector format is completed, the vertical scalar pixel overlapping unit 7 outputs the overlapped vector format image data to the vertical vector image memory unit 8.

The vertical vector image memory unit 8 holds vector format image data (FIGS. 9 to 10B) output from the vertical scalar pixel overlapping unit 7.

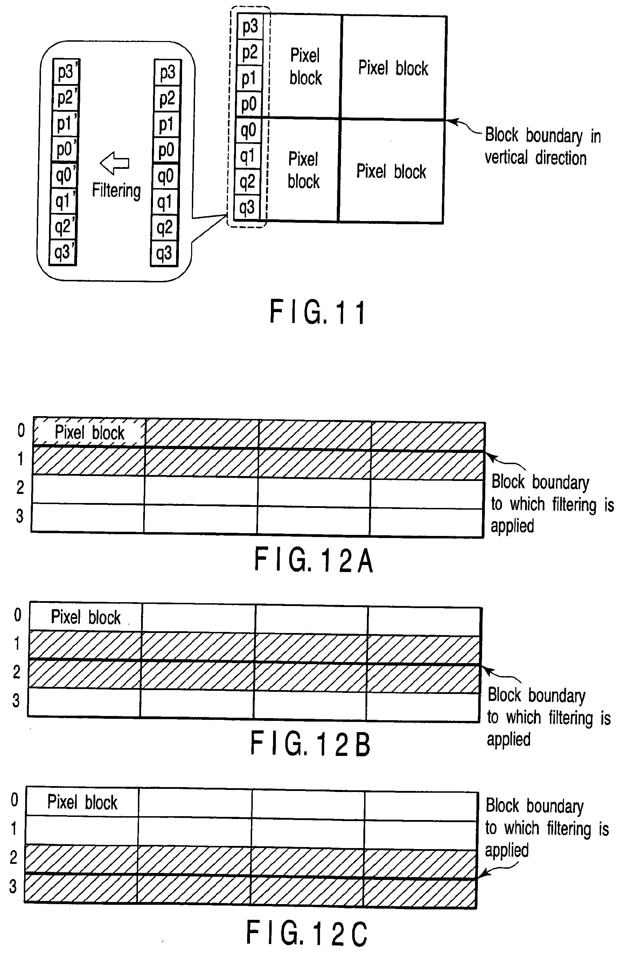

The vertical vector image processing unit 9 subjects the pixel block boundary in the vertical direction of the vector format image data (FIGS. 9 to 10B) held in the vertical vector image memory unit 8 to the deblocking filtering process. In this case, as shown in FIG. 11, eight pixels (p3 to p0 and q0 to q3) arranged on the upper and lower sides of the boundary in the vertical direction of the pixel block are used as a reference pixel of the deblocking filter with respect to the boundary. The concrete processing contents will be explained below.

The processing contents of the deblocking filter with respect to the pixel block boundary in the vertical direction correspond to values obtained by regarding the pixels p3 to p0, q0 to q3, p3' to p1' and q0' to q3' in the processing contents of the horizontal vector image processing unit 6 as values of pixels arranged in the vertical direction as shown in FIG. 11.

Therefore, according to the image processing apparatus of the embodiment, since the pixels of the image data are converted into the vector format pixels as shown in FIGS. 9 to 10B by the vertical scalar pixel overlapping unit 7, the weighted average can be calculated simply by performing the arithmetic operation for the two vector format pixels. Further, the parallel arithmetic unit in the processor is only required to determine one of the two vector format pixels and the number of condition branches can be suppressed to 2.

As a result, the operation of the deblocking filter with respect to the pixel block boundary in the vertical direction can be efficiently performed.

The process dependency of the operation of the deblocking filter with respect to the pixel block boundary in the vertical direction is shown in FIGS. 12A to 12C. Like the process dependency of the operation of the deblocking filter with respect to the pixel block boundary in the horizontal direction, in order to correctly perform the arithmetic operation, first, the boundary between the pixels of the row 0 and row 1 of FIG. 12A is subjected to filtering with reference to the above pixels. After the above filtering process is completed, the boundary between pixels of the row 1 and row 2 of FIG. 12B is subjected to filtering with reference to the above pixels. Then, after the above filtering process is completed, the boundary between pixels of the row 2 and row 3 of FIG. 12C is subjected to filtering with reference to the above pixels.

Then, if calculation for the weighted average for all of the pixels lying near the pixel block boundary in the vertical direction is completed, the vertical vector image processing unit 9 outputs the vector format image data subjected to the deblocking filtering process to the vertical vector image memory unit 8.

The vertical vector image development unit 10 reads out vector format image data (FIGS. 9 to 10B) held in the vertical vector image memory unit 8 and develops the elements of the vector format pixels in the vertical direction to convert the image data into scalar format image data (FIGS. 3A and 3B). In this case, in the operation of conversion from the vector format into the scalar format, an adequate conversion method is selected according to conditions of the height of the pixel block, the format of the vector format pixel before conversion and the format of the scalar format pixel after conversion and the like.

In the embodiment, as shown in FIG. 3A, the height of the pixel block is four pixels. Further, as shown in FIG. 10B, the scalar format pixel before conversion is represented by an 8-bit integer format. Also, as shown in FIG. 3B, the scalar format pixel after conversion is represented by an 8-bit integer format.

In this case, the vertical vector image development unit 10 converts vector format pixels into scalar format pixels as shown in FIG. 3A by developing the elements of the vector format pixels shown in FIG. 9 in the vertical direction.

For example, one vector format pixel (f0, f1, f2, f3) surrounded by broken lines in FIG. 9 is converted into four scalar format pixels f0, f1, f2, f3 surrounded by broken lines in FIG. 3A.

Then, after conversion from the vector format to the scalar format is completed, the vertical vector image development unit 10 outputs the developed scalar format image data to the output scalar image memory unit 11.

The output scalar image memory unit 11 stores the scalar format image data output from the vertical vector image development unit 10.

The presentation unit 12 presents the image data held in the output scalar image memory unit 11 to the user.

As described above, according to the image processing apparatus of the embodiment, a plurality of pixels near the pixel block boundary are overlapped and converted into a vector format. As a result, the operation speed of the deblocking filter can be made high by fully utilizing the arithmetic operation ability of the general-purpose parallel vector processor such as the GPU.

### (Second Embodiment)

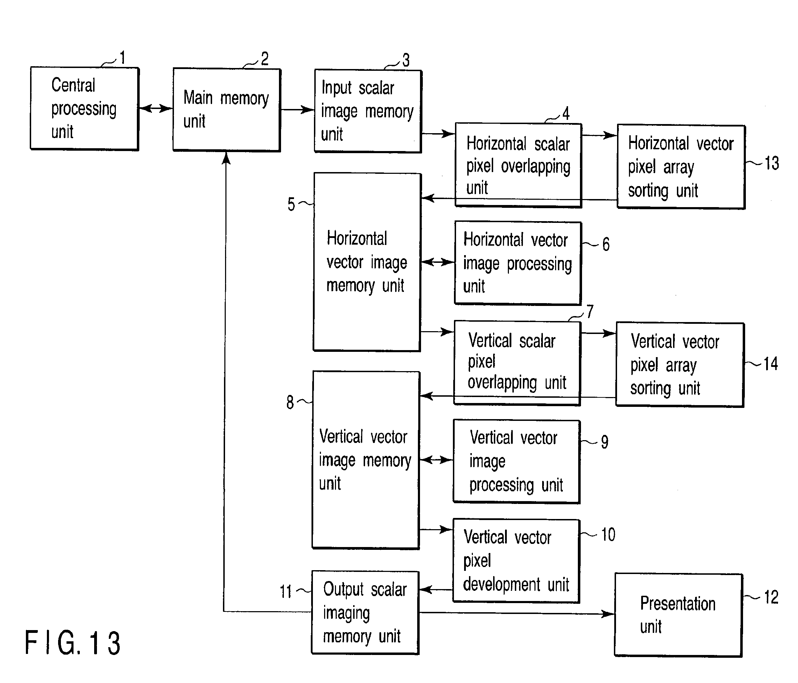

As shown in FIG. 13, a second embodiment is different from the first embodiment in that a horizontal vector pixel array sorting unit 13 and vertical vector pixel array sorting unit 14 are additionally provided in the image processing apparatus according to the first embodiment. Therefore, portions which are the same as those of FIG. 1 are denoted by the same reference symbols and the repetitive explanation for the same portions will be omitted.

As shown in FIGS. 8A to 8C, the horizontal vector image processing unit 6 in the first embodiment first subjects the pixels of the pixel blocks of the column 0 and the pixel blocks of the column 1 to the parallel process by use of the deblocking filter (FIG. 8A) and then the pixels of the column 1 and column 2 are subjected to the parallel process after the former process is completed (FIG. 8B). Then, after the whole process is completed, the pixels of the column 2 and column 3 are subjected to the parallel process (FIG. 8C).

Thus, the horizontal vector image processing unit 6 uses an area of two columns of the pixel blocks as the processing unit in each parallel process. Therefore, for example, in a case where the resolution of an input scalar image (FIGS. 3A and 3B) is set to the width of 1920 pixels and the height of 1080 pixels, the unit of the parallel process is set to an extremely narrow area having the width of two pixels and the height of 1080 pixels.

In the parallel processor such as the GPU, when the extremely narrow pixel area is subjected to the parallel process, the operating rate of the parallel arithmetic unit and the hit rate of the cache are lowered and the original arithmetic operation ability cannot be fully utilized in many cases.

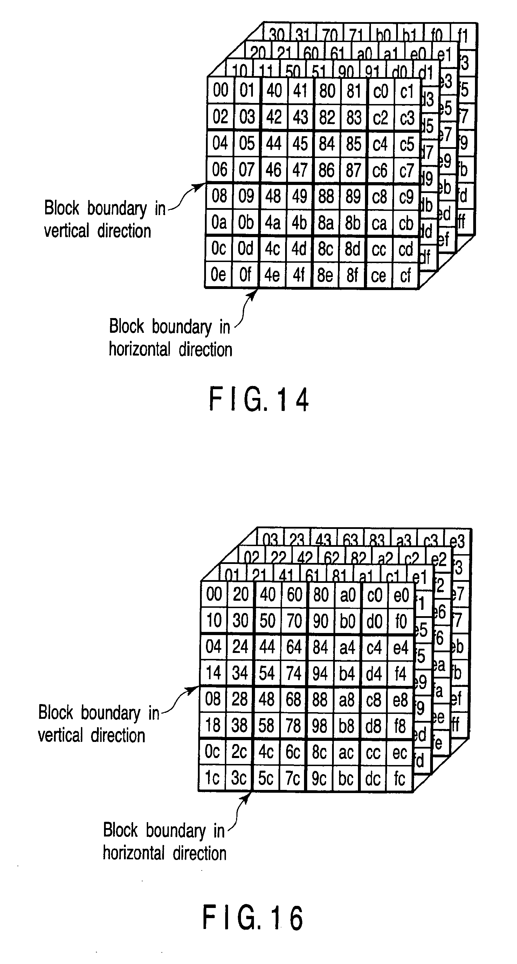

Therefore, in the image processing apparatus of the embodiment, vector format image data (FIGS. 4A to 4C) output from the horizontal scalar pixel overlapping unit 4 is read out by use of the horizontal vector pixel array sorting unit 13 and vector format pixel strings arranged on one column in the vertical direction are sorted on a plurality of columns (refer to FIG. 14).

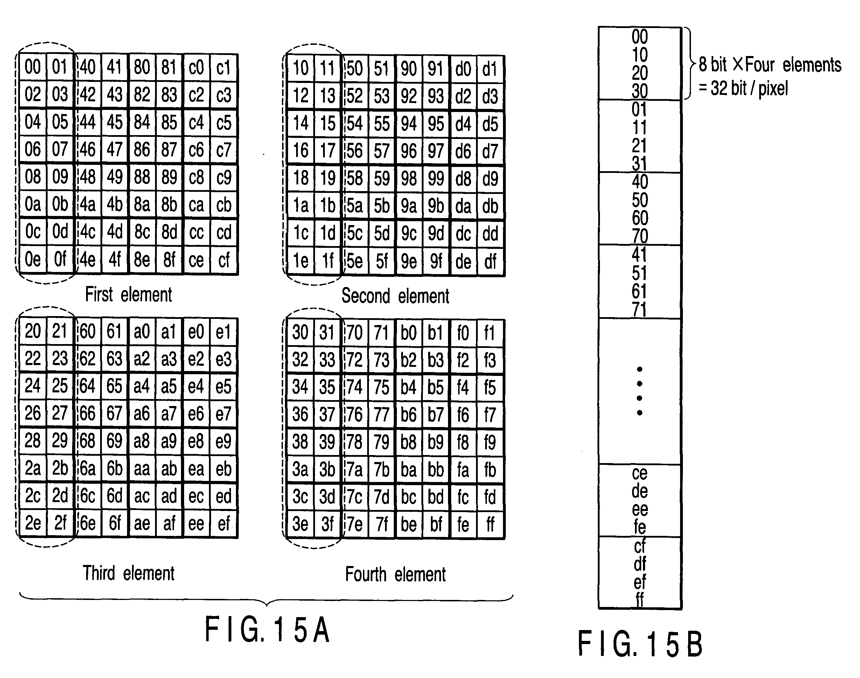

For example, vector format pixel strings (00, 10, 20, 30) to (0f, 1f, 2f, 3f) arranged on one column in the vertical direction on the left end portion surrounded by broken lines in FIG. 4B are sorted into vector format pixel strings arranged on two columns in the vertical direction on the left end portion surrounded by broken lines in FIG. 15A. FIG. 15B is a diagram showing vector format pixels after substitution for each element in a plane format.

As a result, since the unit of the parallel process is changed from a narrow shape to a shape approximately equal to a square and the operating rate of the parallel arithmetic unit and the hit rate of the cache are enhanced, the process of the deblocking filter with respect to the pixel block boundary in the horizontal direction in the latter-stage horizontal vector image processing unit 6 can be efficiently performed.

On the other hand, as shown in FIGS. 12A to 12C, the vertical vector image processing unit 9 in the first embodiment first subjects the pixels of the pixel block of the row 0 and the pixel block of the row 1 to the parallel process (FIG. 12A) and then subjects the pixels of the row 1 and row 2 to the parallel process (FIG. 12B) after the above process is completed. Then, after the above whole process is completed, the pixels of the row 2 and row 3 are subjected to the parallel process (FIG. 12C).

Thus, the vertical vector image processing unit 9 uses an area of two rows of the pixel blocks as a processing unit in each parallel process. Therefore, for example, when the resolution of the input scalar image (FIGS. 3A and 3B) is set to the width of 1920 pixels and the height of 1080 pixels, the unit of the parallel process becomes an extremely narrow area with the width of 1920 pixels and the height of two pixels.

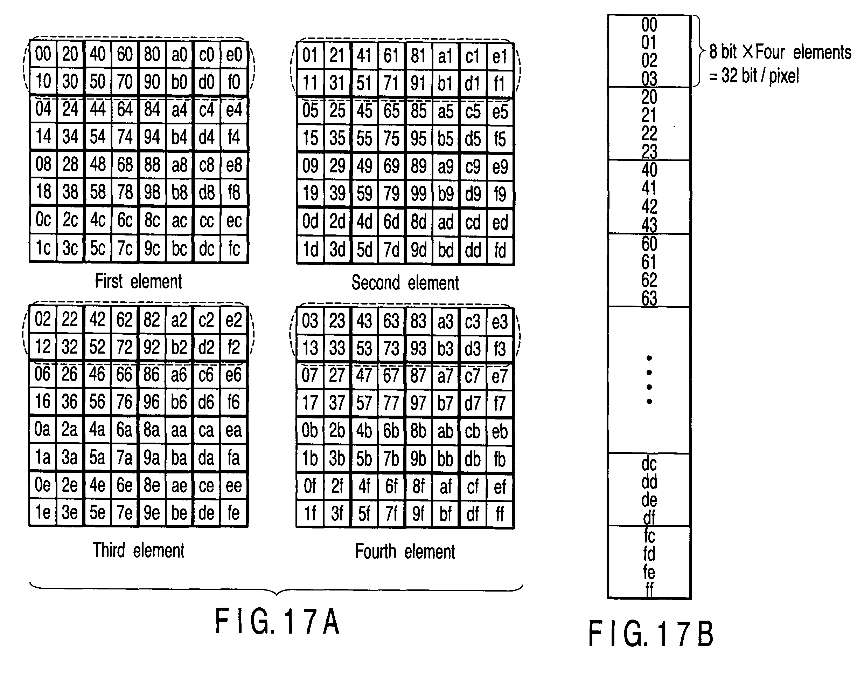

Therefore, in the image processing apparatus according to the embodiment, the process of reading out vector format image data (FIGS. 9 to 10B) output from the vertical scalar pixel overlapping unit 7 and sorting vector format pixel strings arranged on one row in the horizontal direction into a plurality of rows is performed by the vertical vector pixel array sorting unit 14 (refer to FIG. 16).

For example, vector format pixel strings (00, 01, 02, 03) to (f0, f1, f2, f3) arranged on one row in the horizontal direction on the upper end portion in FIG. 10A are sorted into vector format pixel strings of two rows arranged in the horizontal direction on the upper end portion in FIG. 17A. FIG. 17B is a diagram showing vector format pixels after substitution for each element in a plane format.

As a result, since the unit of the parallel process is changed from a narrow shape to a shape approximately equal to a square and the operating rate of the parallel arithmetic unit and the hit rate of the cache are enhanced, the process of the deblocking filter with respect to the pixel block boundary in the vertical direction in the latter-stage vertical vector image processing unit 9 can be efficiently performed.

As described above, according to the image processing apparatus of the second embodiment, the operating rate of the parallel vector processor such as the GPU and the hit rate of the cache can be enhanced and the operation speed of the deblocking filter can be made high by sorting the vector format pixels based on the process dependency of the deblocking filter and the memory access system of the parallel vector processor.

### (Third Embodiment)

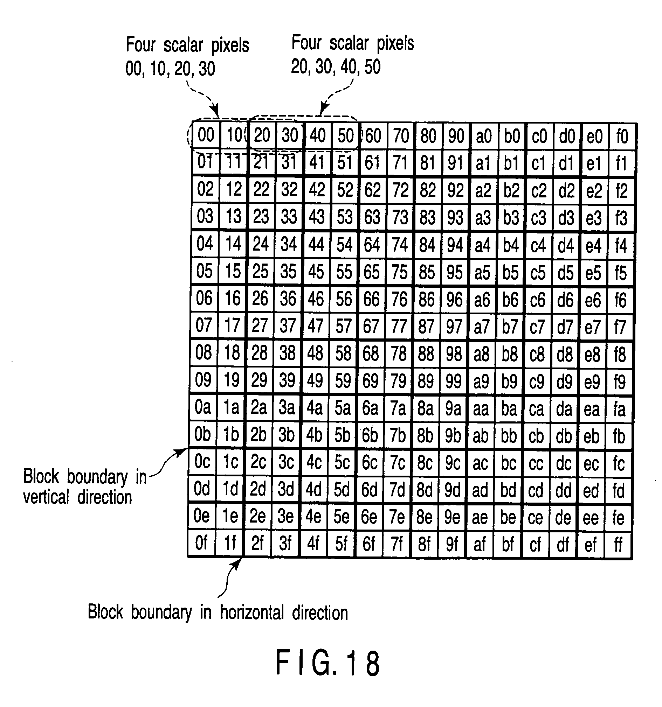

The configuration of an image processing apparatus according to a third embodiment is the same as that of the first or second embodiment, and therefore, the drawing and repetitive explanation thereof are omitted. In the third embodiment, as shown in FIG. 18, a case where the size of the pixel block of the scalar format image data stored in the input scalar image memory unit 3 is set to the width of two pixels and the height of two pixels is explained.

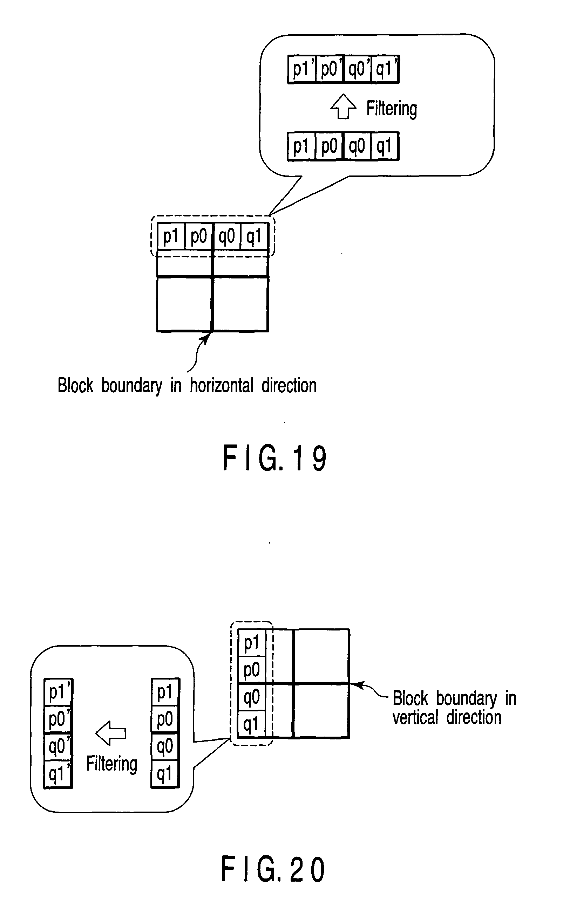

In this case, as shown in FIG. 19, four pixels (p1, p0, q0, q1) arranged on the right and left sides of the boundary between the pixel blocks in the horizontal direction are used as a reference pixel of the deblocking filter with respect to the boundary. Likewise, as shown in FIG. 20, four pixels arranged on the upper and lower sides of the boundary between the pixel blocks in the vertical direction are used as a reference pixel of the deblocking filter with respect to the boundary.

It is assumed that the formatting process of the pixels is the same as that in the first and second embodiments.

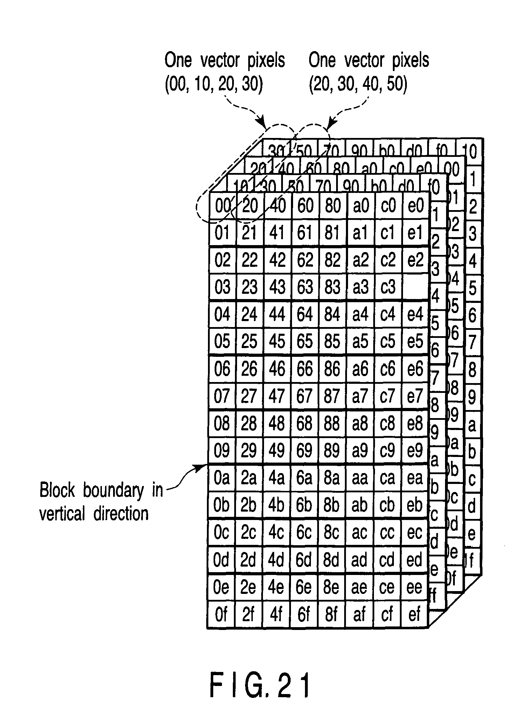

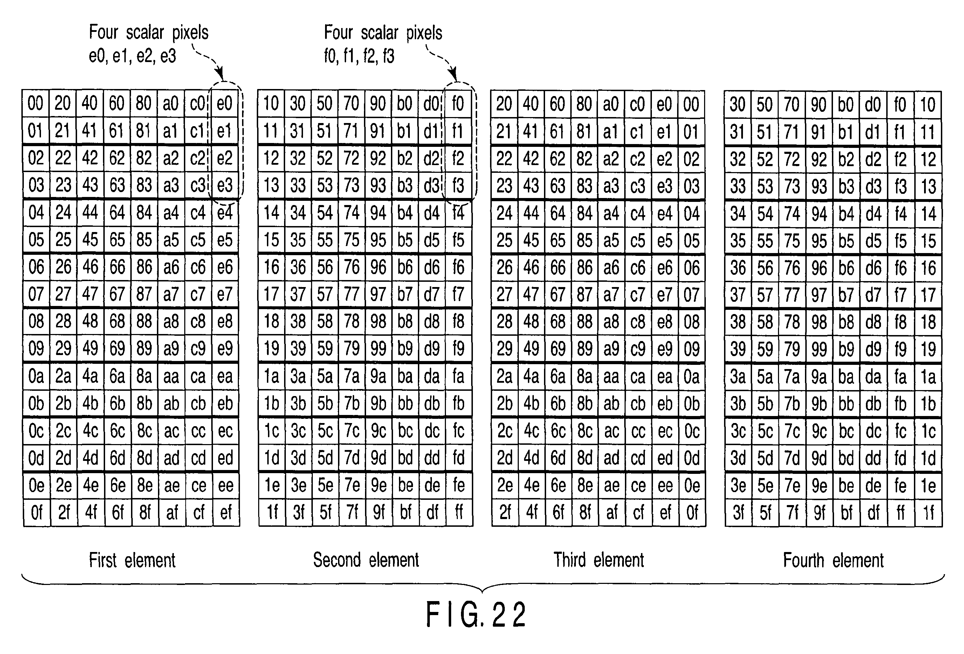

The horizontal scalar pixel overlapping unit 4 is different from that of the first and second embodiments. It overlaps four scalar format pixels arranged on the right and left sides of the boundary between the pixel blocks in the horizontal direction in FIG. 18 and converts them into vector format pixels as shown in FIGS. 21 and 22. The concrete operation is as follows.

For example, four scalar format pixels 00, 10, 20, 30 surrounded by broken lines in FIG. 18 are converted into one vector format pixel (00, 10, 20, 30) surrounded by broken lines in FIG. 21. The four scalar format pixels 20, 30, 40, 50 surrounded by broken lines in FIG. 18 are converted into one vector format pixel (20, 30, 40, 50) surrounded by broken lines in FIG. 21. FIG. 22 is a diagram showing the vector format pixels obtained after conversion for each element in a plane format.

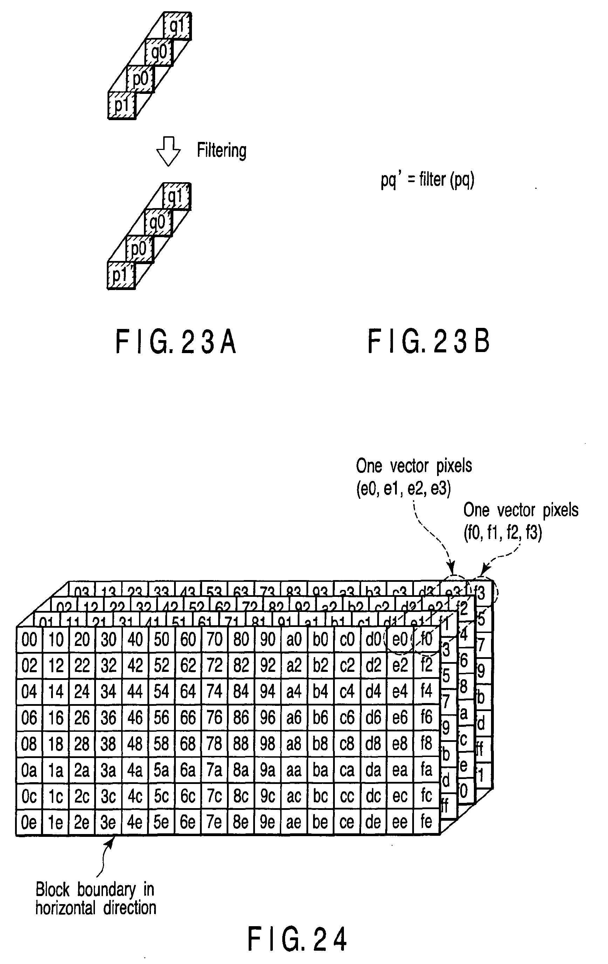

By the above conversion operation, the arithmetic operation of the deblocking filter with respect to the pixel block in the horizontal direction in the horizontal vector image processing unit 6 can be attained simply by performing the arithmetic operation for one vector format pixel as shown in FIG. 23A. Further, as shown in FIG. 23B, it is not necessary for the parallel arithmetic unit in the processor to process the condition branch.

As a result, the arithmetic operation of the deblocking filter with respect to the pixel block boundary in the horizontal direction in the horizontal vector image processing unit 6 can be efficiently performed.

In FIG. 23B, vector format pixels (p1, p0, q0, q1) and (p1', p0', q0', q1') are respectively represented by pq and pq'. Further, filter () is a function used to calculate the weighted average with reference to vector format pixel values given to an argument.

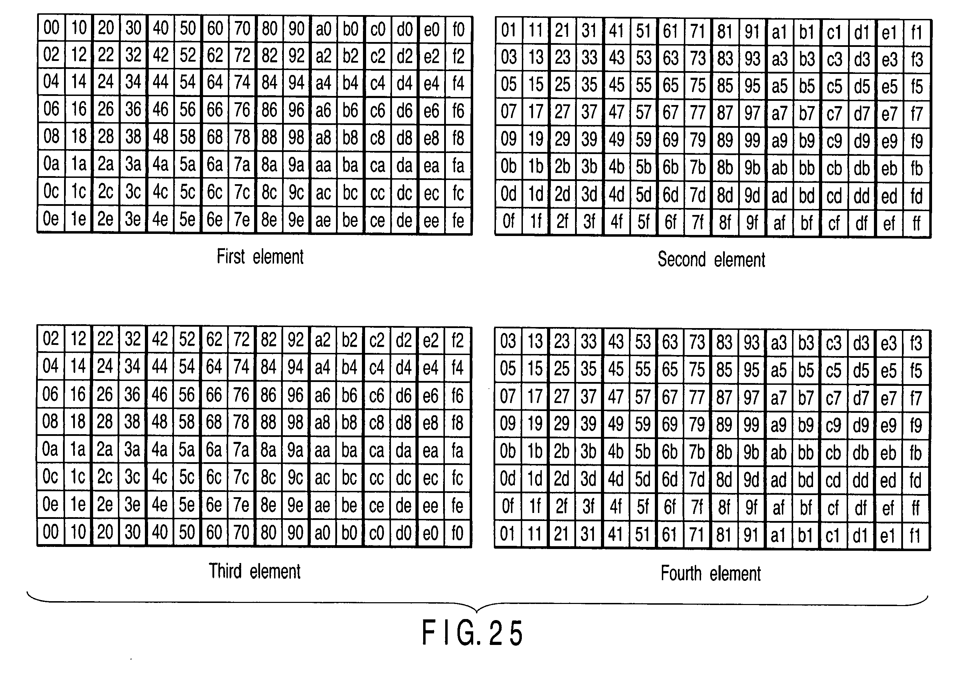

Like the above case and unlike the case of the first and second embodiments, in the vertical scalar pixel overlapping unit 7, four scalar format pixels arranged on the upper and lower sides of the boundary between the pixel blocks in the vertical direction in FIG. 22 are overlapped and converted into different vector format pixels as shown in FIGS. 24 and 25.

For example, four scalar format pixels e0, e1, e2, e3 surrounded by broken lines in FIG. 22 are converted into one vector format pixel (e0, e1, e2, e3) surrounded by broken lines in FIG. 24. Likewise, four scalar format pixels f0, f1, f2, f3 surrounded by broken lines in FIG. 22 are converted into one vector format pixel (f0, f1, f2, f3) surrounded by broken lines in FIG. 24. FIG. 25 is a diagram showing the vector format pixels for each element in a plane format.

By the above conversion operation, the same effect of improvement as that in the case of the horizontal direction can be attained and the arithmetic operation of the deblocking filter with respect to the pixel block boundary in the vertical direction in the vertical vector image processing unit 9 can be efficiently performed.

As described above, according to the image processing apparatus of this embodiment, the arithmetic operation ability of the general-purpose parallel vector processor such as the GPU can be fully utilized and the operation speed of the deblocking filter can be made high by overlapping a plurality of pixels near the pixel block boundary and converting them into a vector format based on the size of the pixel block.

### (Fourth Embodiment)

The configuration of an image processing apparatus according to a fourth embodiment is the same as that of the first or second embodiment, and therefore, the drawing and repetitive explanation thereof are omitted. In the embodiment, a case where four elements of vector format pixels stored in the horizontal vector image memory unit 5 and vertical vector image memory unit 8 are represented by a 16-bit integer format is explained.

It is assumed that the size of the pixel block, the reference pixel of the deblocking filter and the format of the scalar format pixel are the same as those in the first and second embodiments.

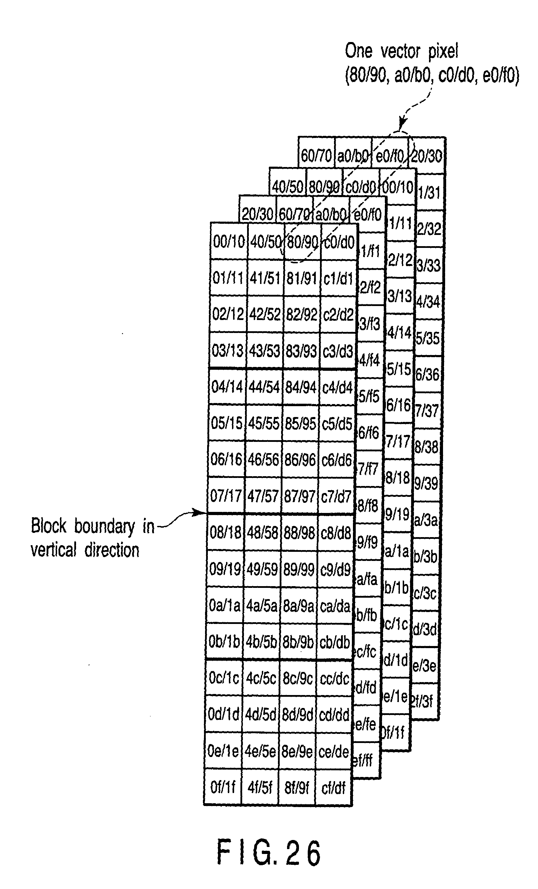

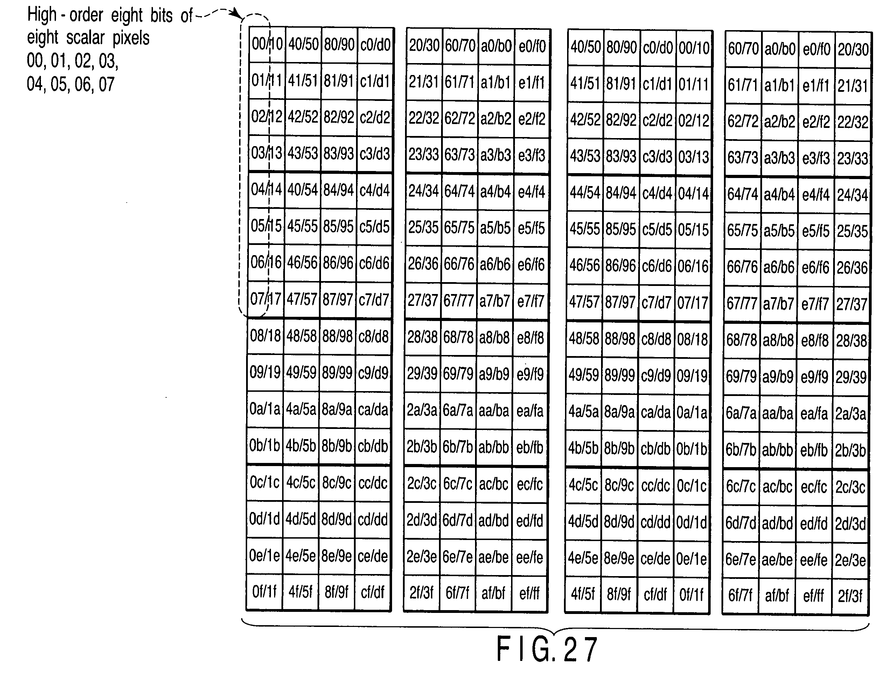

Unlike the first to third embodiments, the horizontal scalar pixel overlapping unit 4 overlaps eight scalar format pixels arranged on the right and left sides of the boundary between the pixel blocks in the horizontal direction in FIG. 3A and converts them into vector format pixels as shown in FIGS. 26 and 27.

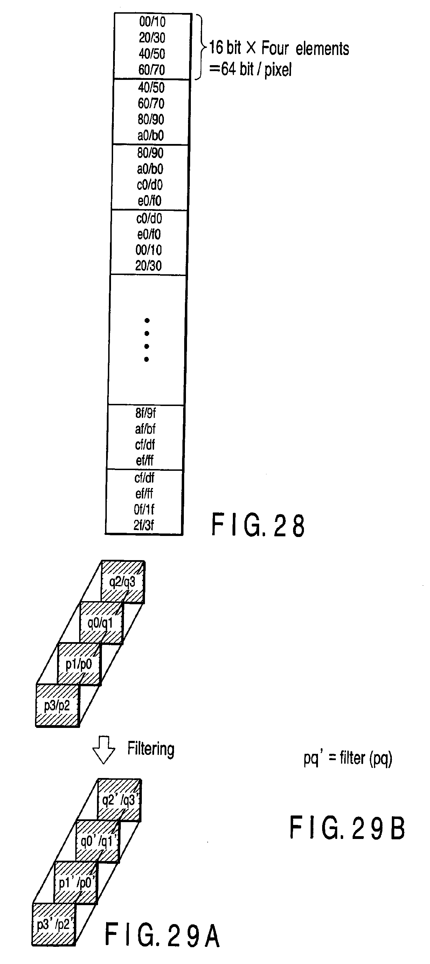

For example, eight scalar format pixels 80, 90, a0, b0, c0, d0, e0, f0 surrounded by broken lines in FIG. 3A are converted into one vector format pixel (80/90, a0/b0, c0/d0, e0/f0) surrounded by broken lines in FIG. 26. In this case, 80/90 indicates a 16-bit value having a value of the pixel 80 allocated to the upper eight bits and a value of the pixel 90 allocated to the lower eight bits. FIG. 28 is a diagram showing an example of the arrangement order of the pixels on the memory.

By the above converting operation, as shown in FIG. 29A, the arithmetic operation of the deblocking filter with respect to the pixel block in the horizontal direction in the horizontal vector image processing unit 6 can be attained simply by performing the arithmetic operation for one vector format pixel. Further, as shown in FIG. 29B, it is not necessary for the parallel arithmetic unit in the processor to process the condition branch.

As a result, the arithmetic operation of the deblocking filter with respect to the pixel block boundary in the horizontal direction in the horizontal vector image processing unit 6 can be efficiently performed.

In FIG. 29B, vector format pixels (p3/p2, p1/p0, q0/q1, q2/q3) and (p3'/p2', p1' /p0', q0'/q1', q2'/q3') are respectively represented by pq and pq'. Further, filter () is a function used to calculate the weighted average with reference to vector format pixel values given to an argument.

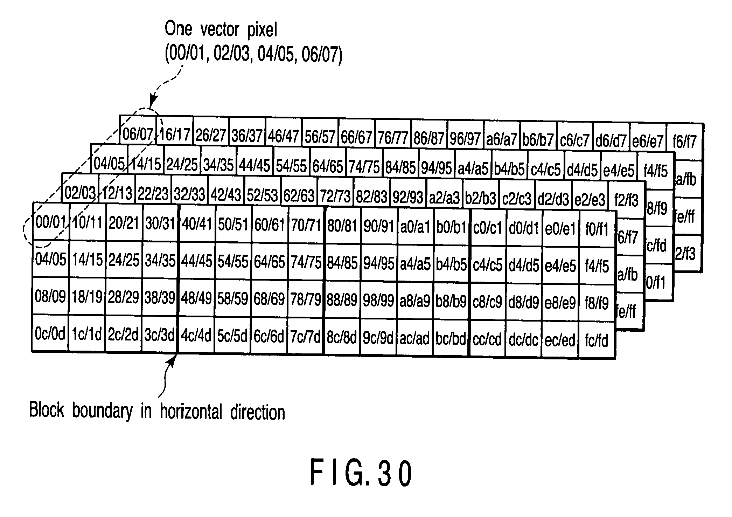

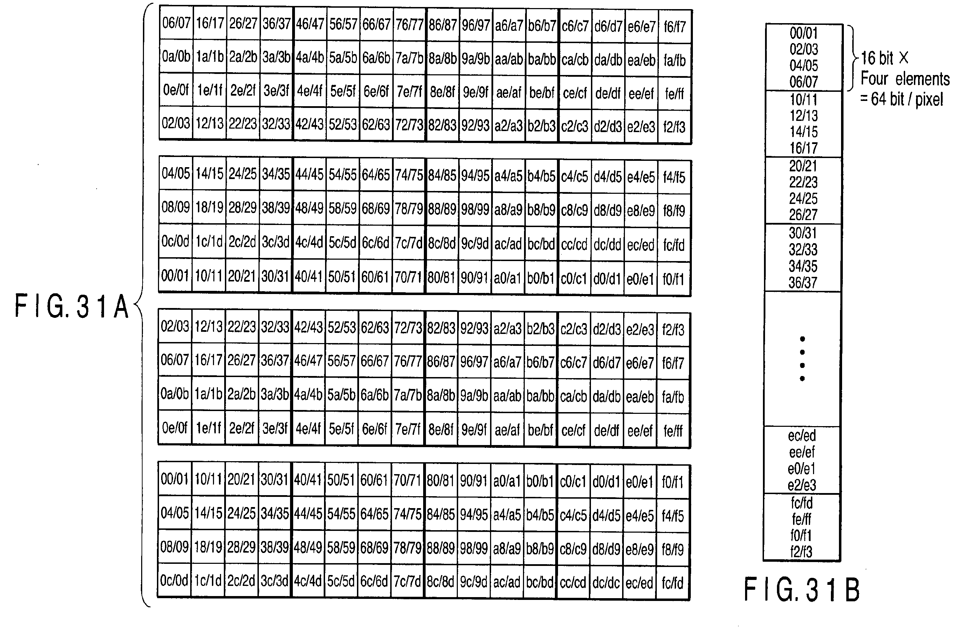

Unlike the first to third embodiments, the vertical scalar pixel overlapping unit 7 overlaps eight scalar format pixels arranged on the upper and lower sides of the boundary between the pixel blocks in the vertical direction in FIG. 27 to convert them into different vector format pixels as shown in FIGS. 30 and 31B as well as the above case.

For example, upper eight bits of the eight scalar format pixels surrounded by broken lines in FIG. 27 are converted into one vector format pixel (00/01, 02/03, 04/05, 06/07) surrounded by broken lines in FIG. 30.

By the above conversion operation, the same effect of improvement as that in the case of the horizontal direction can be attained and the arithmetic operation of the deblocking filter with respect to the pixel block boundary in the vertical direction in the vertical vector image processing unit 9 can be efficiently performed.

As described above, according to the image processing apparatus of this embodiment, the arithmetic operation ability of the general-purpose parallel vector processor such as the GPU can be fully utilized and the operation speed of the deblocking filter can be made high by overlapping a plurality of pixels near the pixel block boundary and converting them into a vector format based on the format of the vector format pixel.

### (Fifth Embodiment)

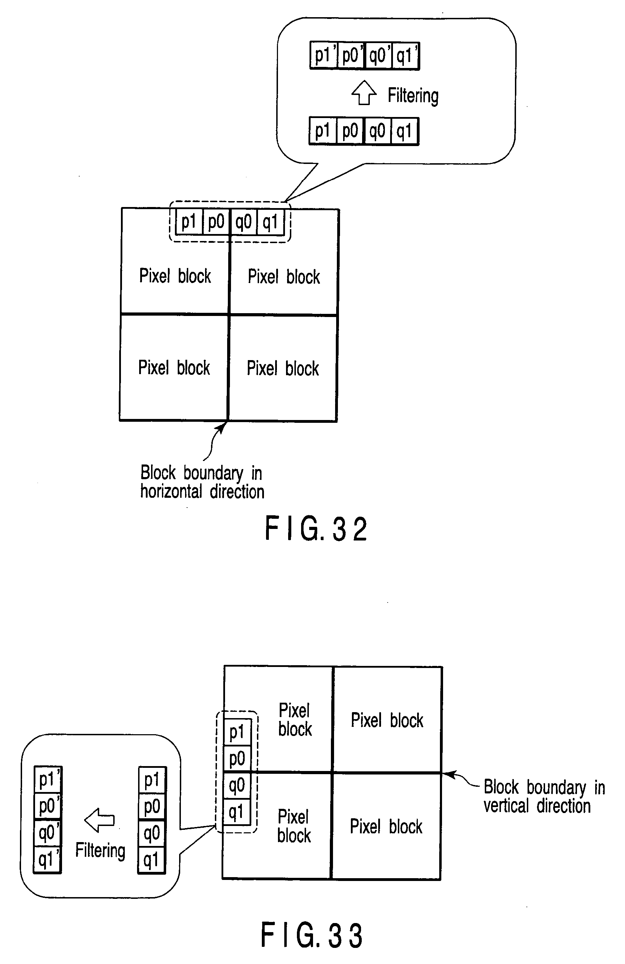

The configuration of an image processing apparatus according to a fifth embodiment is the same as that of the first or second embodiment, and therefore, the drawing and repetitive explanation thereof are omitted. In the embodiment, a case where four pixels (p1, p0, q0, q1) arranged on the right and left sides of the boundary between the pixel blocks in the horizontal direction as shown in FIG. 32 are used as a reference pixel of the deblocking filter with respect to the boundary is explained. Likewise, as shown in FIG. 33, a case where four pixels arranged on the upper and lower sides of the boundary between the pixel blocks in the vertical direction are used as a reference pixel of the deblocking filter with respect to the boundary is explained.

It is assumed that the size of the pixel block and the format of the pixel are the same as those of the first and second embodiments.

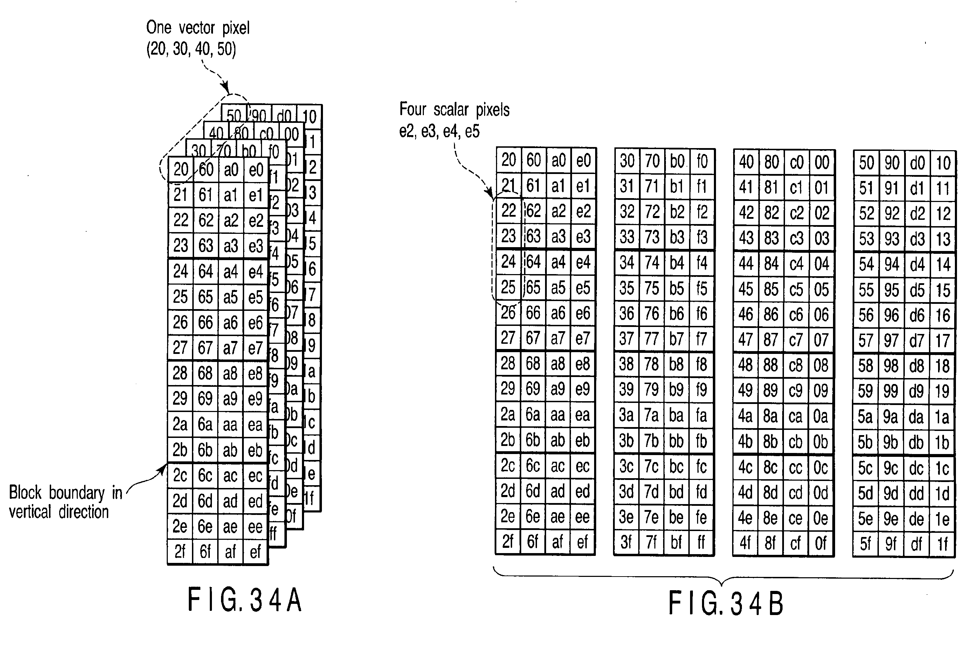

Unlike the first to fourth embodiments, the horizontal scalar pixel overlapping unit 4 overlaps four scalar format pixels arranged on the right and left sides of the boundary between the pixel blocks in the horizontal direction in FIG. 3A and converts them into vector format pixels as shown in FIGS. 34A and 34B.

For example, four scalar format pixels 20, 30, 40, 50 surrounded by broken lines in FIG. 3A are converted into one vector format pixel (20, 30, 40, 50) surrounded by broken lines in FIG. 34A.

By the above conversion operation, the arithmetic operation of the deblocking filter with respect to the pixel block in the horizontal direction in the horizontal vector image processing unit 6 can be attained simply by performing the arithmetic operation for one vector format pixel as shown in FIG. 29A. Further, as shown in FIG. 29B, it is not necessary for the parallel arithmetic unit in the processor to process the condition branch.

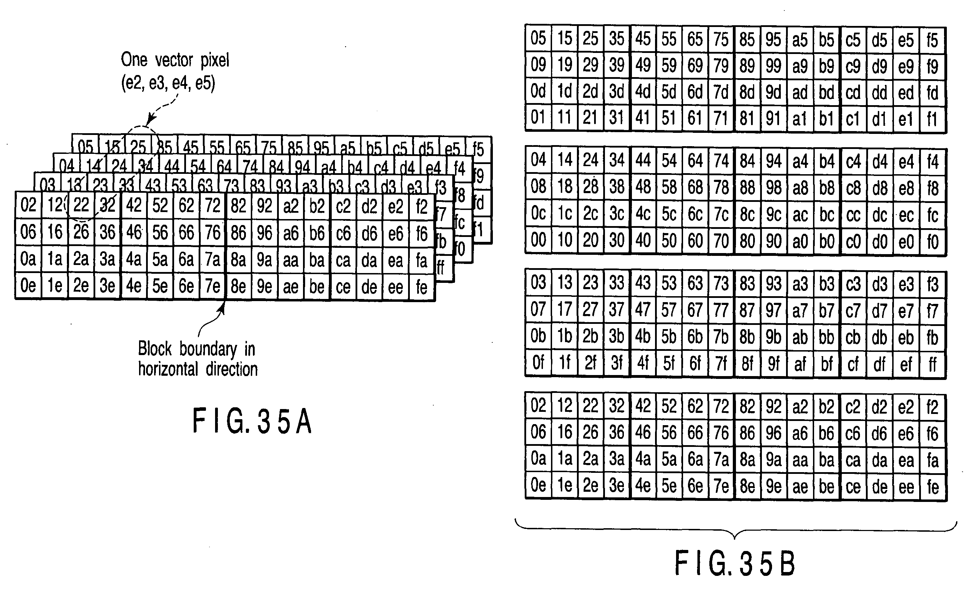

As a result, the arithmetic operation of the deblocking filter with respect to the pixel block boundary in the horizontal direction in the horizontal vector image processing unit 6 can be efficiently performed. Unlike the first to fourth embodiments, the vertical scalar pixel overlapping unit 7 overlaps four scalar format pixels arranged on the upper and lower sides of the boundary between the pixel blocks in the vertical direction in FIG. 34B and converts them into vector format pixels as shown in FIGS. 35A and 35B like the above case.

For example, four scalar format pixels 22, 23, 24, 25 surrounded by broken lines in FIG. 34A are converted into one vector format pixel (22, 23, 24, 25) surrounded by broken lines in FIG. 35A.

By the above conversion operation, the same effect of improvement as that in the case of the horizontal direction can be attained and the arithmetic operation of the deblocking filter with respect to the pixel block boundary in the vertical direction in the vertical vector image processing unit 9 can be efficiently performed.

As described above, according to the image processing apparatus of this embodiment, the arithmetic operation ability of the general-purpose parallel vector processor such as the GPU can be fully utilized and the operation speed of the deblocking filter can be made high by overlapping a plurality of pixels near the pixel block boundary and converting them into a vector format based on the reference pixel of the deblocking filter.

### (Sixth Embodiment)

The configuration of an image processing apparatus according to a sixth embodiment is the same as that of the second embodiment, and therefore, the drawing and repetitive explanation thereof are omitted. In the embodiment, the pixel substitution method by the horizontal vector pixel array sorting unit 13 and vertical vector pixel array sorting unit 14 is different from that in the second embodiment.

In the second embodiment, the horizontal vector pixel array sorting unit 13 reads out vector format image data (FIGS. 4A to 4C) output from the horizontal scalar pixel overlapping unit 4 and sorts vector format pixel strings arranged on one column in the vertical direction into a plurality of columns.

In contrast, in the embodiment, the horizontal vector pixel array sorting unit 13 performs the process of sorting vector format pixel strings arranged on one column in the vertical direction into a plurality of columns and then reallocating the plurality of columns.

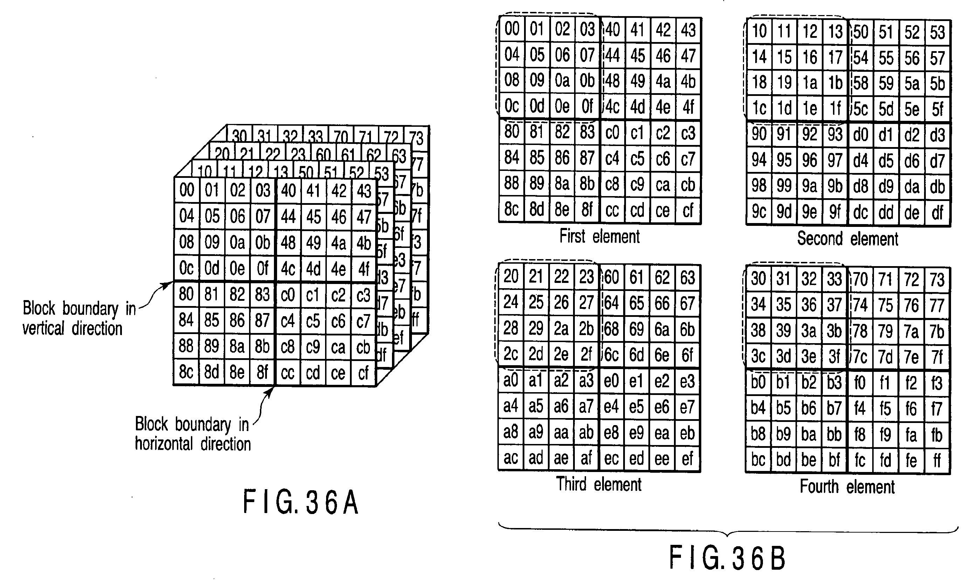

For example, vector format pixel strings (00, 10, 20, 30) to (0f, 1f, 2f, 3f) arranged on one column in the vertical direction on the left end portion surrounded by broken lines in FIG. 4B are sorted into vector format pixel strings arranged on four columns (four rows) and then allocated on the upper left portion of the pixel area of 8 rows and 8 columns in FIGS. 36A and 36B.

Further, vector format pixel strings (40, 50, 60, 70) to (4f, 5f, 6f, 7f) arranged on the second column from the left end in FIG. 4B are sorted into vector format pixel strings arranged on four columns (four rows) and then allocated on the upper right portion of the pixel area of 8 rows and 8 columns in FIGS. 36A and 36B.

Vector format pixel strings (80, 90, a0, b0) to (8f, 9f, af, bf) arranged on the third column from the left end in FIG. 4B are sorted into vector format pixel strings arranged on four columns (four rows) and then allocated on the lower left portion of the pixel area of 8 rows and 8 columns in FIGS. 36A and 36B.

In addition, vector format pixel strings (c0, d0, e0, f0) to (cf, df, ef, ff) arranged on the right end portion in FIG. 4B are sorted into vector format pixel strings arranged on four columns (four rows) and then allocated on the lower right portion of the pixel area of 8 rows and 8 columns in FIGS. 36A and 36B.

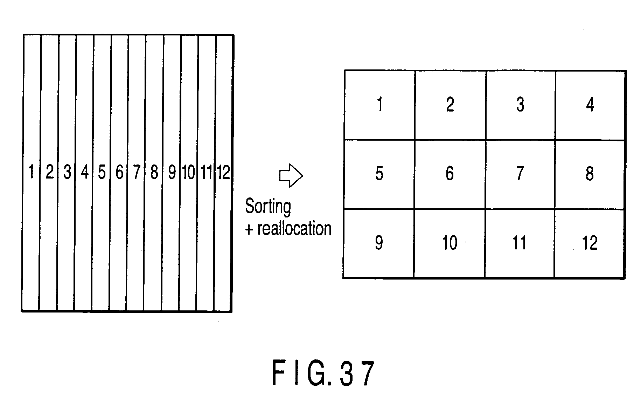

FIG. 37 shows one example of the reallocation method in the embodiment. According to FIG. 37, the horizontal vector pixel array sorting unit 13 sorts vector format pixel strings arranged on one column in the vertical direction into a plurality of columns and then sequentially allocates the plurality of columns in the horizontal direction. After the allocation process is performed by an adequate number of times, the process returns to the start point, then proceeds to the next row and is performed to sequentially allocate them in the horizontal direction by the same number of times.

The turning position may be determined according to the memory access method of the parallel vector processor and the cache structure.

By performing the above reallocation process, the operating rate of the parallel arithmetic unit and the hit rate of the cache are enhanced, and therefore, the process of the deblocking filter with respect to the pixel block boundary in the horizontal direction in the latter-stage horizontal vector image processing unit 6 can be efficiently performed.

The vertical vector pixel array sorting unit 14 of the embodiment performs the process of sorting vector format pixel strings arranged on one row in the horizontal direction into a plurality of rows and then reallocating the plurality of rows. The reallocation process is the feature of the vertical vector pixel array sorting unit 14 of the embodiment.

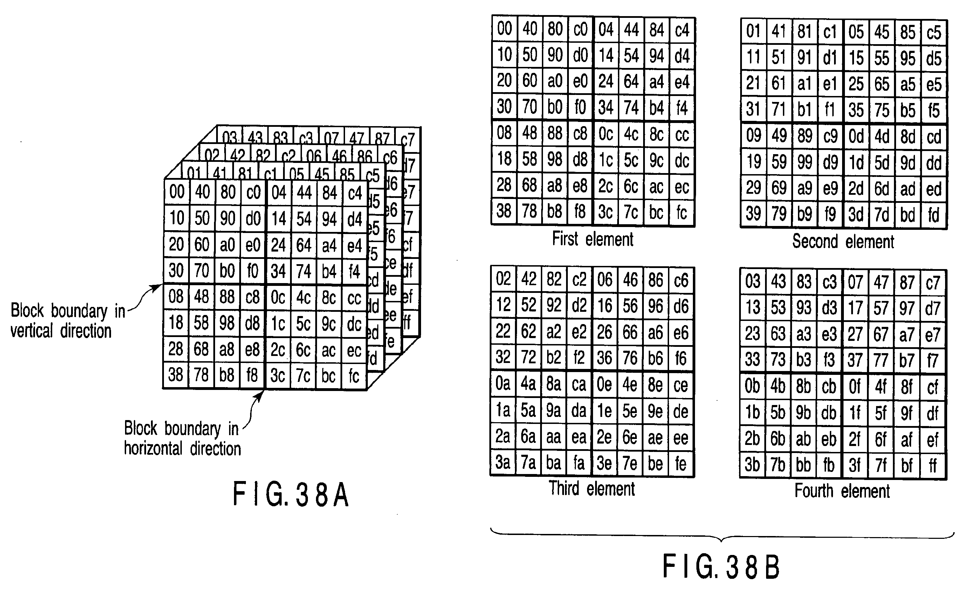

For example, vector format pixel strings (00, 01, 02, 03) to (f0, f1, f2, f3) arranged on one row in the horizontal direction on the upper end surrounded by broken lines in FIG. 10A are sorted into vector format pixel strings arranged on four rows (four columns) and then allocated on the upper left portion of the pixel area of 8 rows and 8 columns in FIGS. 38A and 38B.

Vector format pixel strings (04, 05, 06, 07) to (f4, f5, f6, f7) arranged on the second row from the top in FIG. 10A are sorted into vector format pixel strings arranged on four rows (four columns) and then allocated on the upper right portion of the pixel area of 8 rows and 8 columns in FIGS. 38A and 38B.

Further, vector format pixel strings (08, 09, 0a, 0b) to (f8, f9, fa, fb) arranged on the third row from the top in FIG. 10A are sorted into vector format pixel strings arranged on four rows (four columns) and then allocated on the lower left portion of the pixel area of 8 rows and 8 columns in FIGS. 38A and 38B.

In addition, vector format pixel strings (0c, 0d, 0e, 0f) to (fc, fd, fe, ff) arranged on the lower end portion in FIG. 10A are sorted into vector format pixel strings arranged on four rows (four columns) and then allocated on the lower right portion of the pixel area of 8 rows and 8 columns in FIGS. 38A and 38B.

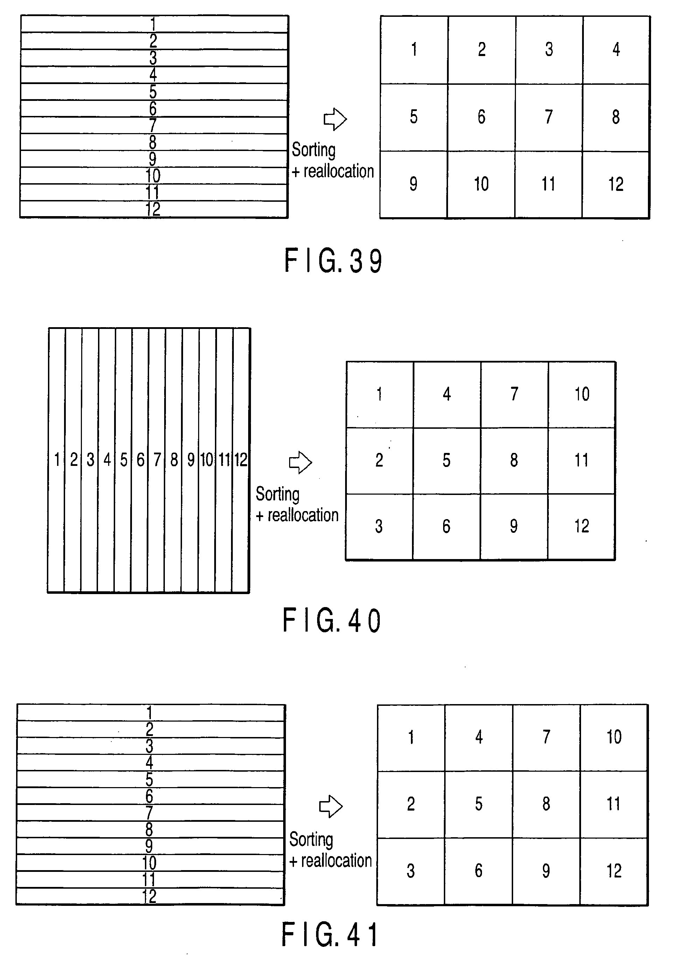

FIG. 39 shows an example of the reallocation method in the embodiment. According to FIG. 39, the vertical vector pixel array sorting unit 14 sorts vector format pixel strings arranged on one row in the horizontal direction into a plurality of rows and then sequentially allocates the plurality of rows in the horizontal direction. After the allocation process is performed by an adequate number of times, the process returns to the start point, then proceeds to the next row and is performed to sequentially allocate them in the horizontal direction by the same number of times.

The turning position may be determined according to the memory access system of the parallel vector processor and the cache structure.

By performing the above reallocation process, the operating rate of the parallel arithmetic unit and the hit rate of the cache are enhanced, and therefore, the process of the deblocking filter with respect to the pixel block boundary in the vertical direction in the latter-stage vertical vector image processing unit 9 can be efficiently performed.

As described above, according to the image processing apparatus of the embodiment, the operating rate of the parallel vector processor such as the GPU and the hit rate of the cache can be enhanced and the operation speed of the deblocking filter can be made high by sorting the vector format pixels based on the process dependency of the deblocking filter and the memory access system of the parallel vector processor.

### (Seventh Embodiment)

The configuration of an image processing apparatus according to a seventh embodiment is the same as that of the second embodiment, and therefore, the drawing and repetitive explanation thereof are omitted. In the embodiment, the pixel substitution method by the horizontal vector pixel array sorting unit 13 and vertical vector pixel array sorting unit 14 is different from that in the second embodiment.

In the sixth embodiment, the horizontal vector pixel array sorting unit 13 sorts vector format pixel strings arranged on one column in the vertical direction into a plurality of columns and then sequentially allocates the plurality of columns in the horizontal direction.

In contrast, as shown in FIG. 40, the horizontal vector pixel array sorting unit 13 sorts vector format pixel strings arranged on one column in the vertical direction into a plurality of columns and then sequentially allocates the plurality of columns in the vertical direction. After the allocation process is performed by an adequate number of times, the process returns to the start point, then proceeds to the next row and is performed to sequentially allocate them in the vertical direction by the same number of times.

The turning position may be determined according to the memory access system of the parallel vector processor and the cache structure.

By performing the above reallocation process, the operating rate of the parallel arithmetic unit and the hit rate of the cache are enhanced, and therefore, the process of the deblocking filter with respect to the pixel block boundary in the horizontal direction in the latter-stage horizontal vector image processing unit 6 can be efficiently performed.

The vertical vector pixel array sorting unit 14 of the sixth embodiment sorts vector format pixel strings arranged on one row in the horizontal direction into a plurality of rows and then sequentially allocates the plurality of rows in the horizontal direction.

In contrast, as shown in FIG. 41, the vertical vector pixel array sorting unit 14 sorts vector format pixel strings arranged on one row in the horizontal direction into a plurality of rows and then sequentially allocates the plurality of rows in the vertical direction. After the allocation process is performed by an adequate number of times, the process returns to the start point, then proceeds to the next row and is performed to sequentially allocate them in the vertical direction by the same number of times.

The turning position may be determined according to the memory access system of the parallel vector processor and the cache structure.

By performing the above reallocation process, the operating rate of the parallel arithmetic unit and the hit rate of the cache are enhanced, and therefore, the process of the deblocking filter with respect to the pixel block boundary in the vertical direction in the latter-stage vertical vector image processing unit 9 can be efficiently performed.

As described above, according to the image processing apparatus of the embodiment, the operating rate of the parallel vector processor such as the GPU and the hit rate of the cache can be enhanced and the operation speed of the deblocking filter can be made high by sorting the vector format pixels based on the process dependency of the deblocking filter and the memory access system of the parallel vector processor.

In the above embodiments, the process of overlapping scalar pixels in the order of the horizontal pixels and vertical pixels, but the overlapping process of the vertical pixels may be first performed and subjected to the deblocking filtering process and then the overlapping process of the horizontal pixels may be performed.

Further, in the above embodiments, the scalar pixels of both of the horizontal pixels and vertical pixels are overlapped and converted into a vector format, but the overlapping process may be performed only for one of the above two types of pixels. In this case, for example, in the first embodiment, the deblocking filtering process by the horizontal vector image process may first be performed and then the horizontal vector pixels may be developed.

According to this invention, the ability of the general-purpose parallel vector processor such as the GPU can be fully utilized and the operation speed of the deblocking filter can be made high.

## Claims

1. An image processing apparatus **characterized by** comprising:
an overlapping unit (4, 7) configured to overlap a plurality of scalar format images arranged in at least one of a horizontal direction and a vertical direction and convert them into vector format image data; and
an image processing unit (6, 9) configured to perform a deblocking filter processing for the vector image data.

2. The apparatus according to claim 1, **characterized by** further comprising a development unit configured to develop each element of pixels in the vector format image data to which the deblocking filter processing is performed, in at least one of a horizontal direction and a vertical direction and convert the vector format image data to scalar format image data.

3. The apparatus according to claim 1, **characterized by** further comprising a sorting unit configured to sort vector format pixel strings to create a plurality of columns, the vector format pixel strings which is included in the vector format image data output from the overlapping unit and is arranged on one column in the vertical direction.

4. The apparatus according to claim 1, **characterized by** further comprising:
a first storage configured to hold data including a program and a moving picture image, the program which controls a operation of each unit,;
a second storage configured to store the plurality of scalar format images;
a third storage configured to store the vector format image data; and
a fourth storage configured to store scalar format image data obtained by developing the vector format image data, to which the deblocking filter processing is performed.

5. The apparatus according to claim 1, **characterized by** further comprising a presentation unit configured to present scalar format image data obtained by developing the vector format image data, to which the deblocking filter processing is performed

6. The apparatus according to claim 1, **characterized in that** the overlapping unit converts the scalar format images into vector format image data so that pixels continuously arranged in a horizontal direction or a vertical direction in a pixel block including a predetermined number of pixels are converted to elements of one vector.

7. The apparatus according to claim 1, **characterized in that** the image processing unit sequentially performs the deblocking filter processing from a vector format pixel on an end portion of the vector format image data.

8. The apparatus according to claim 1, **characterized in that** the overlapping unit converts the scalar format images into vector format image data so that pixels continuously arranged in a horizontal direction or a vertical direction in a pixel block including a predetermined number of pixels and a pixel block adjacent thereto are converted to an element of one vector.

9. An image processing apparatus **characterized by** comprising:
a first overlapping unit configured to overlap a plurality of scalar format images arranged in a horizontal direction and convert them into first vector format image data;
a first image processing unit configured to perform a deblocking filter processing for the first vector image data;
a second overlapping unit configured to overlap each element of a plurality of scalar format images arranged in a horizontal direction to convert them into first vector format image data;
a second image processing unit configured to perform a deblocking filter processing for the second vector image data;

10. The apparatus according to claim 9, **characterized by** further comprising a development unit configured to develop each element of pixels in the second vector format image data, to which the deblocking filter processing is performed by the second image processing unit, in a vertical direction and convert the second vector format image data to scalar format image data.

11. The apparatus according to claim 9, **characterized by** further comprising:
a first storage configured to hold data including a program, which controls a operation of each unit, and a moving picture image;
a second storage configured to store the plurality of scalar format images;
a third storage configured to store the first and second vector format image data; and
a fourth storage configured to store scalar format image data obtained by developing the vector format image data, to which the deblocking filter processing is performed.

12. The apparatus according to claim 9, **characterized by** further comprising a presentation unit configured to present scalar format image data obtained by developing the vector format image data, to which the deblocking filter processing is performed

13. The apparatus according to claim 9, **characterized in that** the overlapping unit converts the scalar format images into vector format image data so that pixels continuously arranged in a horizontal direction or a vertical direction in a pixel block including a predetermined number of pixels are converted to elements of one vector.

14. The apparatus according to claim 9, **characterized in that** the image processing unit sequentially performs the deblocking filter processing from a vector format pixel on an end portion of the vector format image data.

15. The apparatus according to claim 9, **characterized by** further comprising:
a first sort unit configured to sort vector format pixel strings to create a plurality of columns, the vector format pixel strings which is included in the vector format image data output from the first overlapping unit and is arranged on one column in the vertical direction; and
a second sort unit configured to sort vector format pixel strings to create a plurality of columns, the vector format pixel strings which is included in the vector format image data output from the second overlapping unit and is arranged on one row in the horizontal direction.

16. An image processing method **characterized by** comprising:
overlapping a plurality of scalar format pixels arranged in at least one of a horizontal direction and a vertical direction to convert them into vector format image data; and
performing a deblocking filter processing for the vector image data.

17. A computer readable program for performing a deblocking filter processing to image data, **characterized by** comprising:
code means for overlapping a plurality of scalar format pixels arranged in at least one of a horizontal direction and a vertical direction to convert them into vector format image data; and
code means for performing a deblocking filter processing for the vector image data.
